# EUROPÄISCHE PATENTSCHRIFT

(11) **EP 2 438 321 B1**
(45) Veröffentlichungstag und Bekanntmachung des Hinweises auf die Patenterteilung: **29.10.2014**
(21) Anmeldenummer: 10730029.5
(22) Anmeldetag: 04.06.2010
(51) Int. Cl.: F16H 3/34, F16H 3/20

(54) **VERFAHREN ZUM UMBAU EINES VERTEILERGETRIEBES FÜR MEHRERE ABTRIEBE**
METHOD FOR MODIFYING A TRANSFER CASE FOR A PLURALITY OF OUTPUTS
PROCÉDÉ DESTINÉ À TRANSFORMER UNE BOÎTE DE TRANSFERT POUR PLUSIEURS SORTIES

(30) Priorität: 04.06.2009 AT 34409 U
(43) Veröffentlichungstag der Anmeldung: 11.04.2012
(73) Patentinhaber: Neustifter, Johann, 4511 Allhaming (AT)
(72) Erfinder: Neustifter, Johann, 4511 Allhaming (AT)
(74) Vertreter: Hübscher, Helmut
(86) Internationale Anmeldenummer: PCT/AT2010/000196
(87) Internationale Veröffentlichungsnummer: WO 2010/138985

(56) Entgegenhaltungen:
- DE-A1- 3 841 016
- JP-U- 61 007 650

## Beschreibung

### Technisches Gebiet

Es wird ein Verfahren zum Umbau eines Verteilergetriebes für mehrere Abtriebe, die an einen gemeinsamen Antriebstrang über Zwischenzahnräder angeschlossen sind, deren Lagergehäuse die axial ausbaubaren Radachsen aufnehmen, wobei die einzelnen Abtriebe vom gemeinsamen Antriebstrang abgekoppelt und an Einzelantriebe angeschlossen werden.

### Stand der Technik

Um mehrere Maschinenkomponenten, beispielsweise Walzen oder Trommeln einer Trockengruppe einer Papiermaschine, in einem vorgegebenen Geschwindigkeitsverhältnis anzutreiben, ist es bekannt, Verteilergetriebe mit entsprechenden Abtrieben für die einzelnen Maschinenkomponenten vorzusehen. Diese Abtriebe sind dabei über Zwischenzahnräder an einem gemeinsamen Antriebstrang angeschlossen. Nachteilig bei diesen bekannten, aufgrund der meist rauen Antriebsbedingungen schweren Verteilergetrieben ist vor allem, dass sie einem vergleichsweise hohen Verschleiß unterliegen und bei einem Zahn- oder Lagerbruch lange Stillstandszeiten bedingen. Man kommt daher immer mehr von solchen Verteilergetrieben ab und ersetzt sie durch Einzelantriebe, zumal die Steuerung solcher Einzelantriebe durchaus in der Lage ist, die geforderten Geschwindigkeitsverhältnisse mit einer ausreichenden Genauigkeit sicherzustellen. Während bei Neuanlagen der Einsatz von Einzelantrieben keine Schwierigkeiten macht, ergibt sich beim Umbau von bestehenden Verteilergetrieben ein erheblicher Aufwand, die einzelnen Abtriebe mit entsprechenden Einzelantrieben zu verbinden, weil die die jeweiligen Abtriebe mit dem gemeinsamen Antriebstrang verbindenden Zwischenzahnräder ausgebaut werden müssen, was bei großen Verteilergetrieben ein weitgehendes Zerlegen des Verteilergetriebes und häufig weiterer Anlagenteile erfordert. Außerdem besteht die Gefahr von Folgeschäden, weil sich durch den Aus- und Einbau von Getriebeteilen Undichtheiten ergeben können.

Dokument DE 384 1016 A1 wird als der nächste Stand der Technik angesehen und offenbart die Präambel der Ansprüche 1 und 3.

### Darstellung der Erfindung

Der Erfindung liegt somit die Aufgabe zugrunde, ein Verfahren zum Umbau eines Verteilergetriebes für mehrere Abtriebe so auszugestalten, dass der Aufwand zur Umrüstung des Verteilergetriebes auf Einzelantriebe erheblich verringert werden kann und Folgeschäden vermieden werden.

Ausgehend von einem Verfahren der eingangs geschilderten Art zum Umbau eines Verteilergetriebes für mehrere Abtriebe löst die Erfindung die gestellte Aufgabe dadurch, dass die Radachse zumindest eines Zwischenzahnrads in der Antriebsverbindung zwischen dem jeweiligen Abtrieb und dem gemeinsamen Antriebstrang durch eine über exzentrische Stirnzapfen vorzugsweise exzentrisch in Lagerdeckeln gelagerte Stellachse ausgewechselt wird, bevor das Zwischenzahnrad durch ein Drehen der Stellachse um die Stimzapfen außer Eingriff geschwenkt wird.

Mit dem Ersatz der Radachsen der aus einem Eingriff mit benachbarten Zahnrädern zu lösenden Zwischenzahnräder durch Stellachsen, die exzentrisch in Lagerdeckeln der Lagergehäuse drehverstellbar gehalten sind, wird eine vorteilhafte Voraussetzung dafür geschaffen, dass die jeweiligen Zwischenzahnräder außer Zahneingriff gebracht werden können, ohne diese Zwischenzahnräder ausbauen zu müssen, weil aufgrund der exzentrischen Lagerung der Stellachsen die Zwischenzahnräder auf diesen Stellachsen zum Lösen des jeweiligen Zahneingriffs mit der Exzentrizität der Stellachsenlagerung als Schwenkradius um die exzentrischen Stirnzapfen der Stellachsen verschwenkt werden können. Es bedarf daher keiner aufwendigen Zerlegung des Verteilergetriebes bzw. weiterer Anlagenteile, um die einzelnen Abtriebe des Verteilergetriebes nicht über den gemeinsamen Antriebstrang, sondern über Einzelantriebe zu beaufschlagen. Zur notwendigen Unterbrechung der Antriebsverbindung zwischen den Abtrieben und dem gemeinsamen Antriebstrang brauchen somit lediglich die Radachsen der aus der Antriebsverbindung zu nehmenden Zwischenzahnräder axial aus ihren Lagergehäusen abgezogen und durch entsprechende Stellachsen ersetzt zu werden, wobei Lagerdeckel zur Aufnahme der Stellachsen vorzusehen sind. Sind für das Lösen des jeweiligen Zahneingriffs vergleichsweise geringe Stellwege erforderlich, so könnten die exzentrischen Stirnzapfen der Stellachsen in den Lagerdeckeln zentrisch aufgenommen werden. Im Allgemeinen werden jedoch größere Stellwege für die Verlagerung der Zwischenzahnräder zur Unterbrechung der Antriebsverbindung angestrebt, sodass eine exzentrische Lagerung der Stirnzapfen der Stellachsen in den Lagerdeckeln bevorzugt wird. Durch ein Drehen der in den Lagerdeckeln exzentrisch gehaltenen Stellachsen werden die darauf sitzenden Zwischenzahnräder aus dem Zahneingriff mit einem benachbarten Zahnrad genommen. Das aus der Antriebsverbindung genommene Zwischenzahnrad kann dann im Getriebe verbleiben, sodass sich eine Zerlegung des Getriebes zur Entnahme dieser Zwischenzahnräder erübrigt.

Damit sichergestellt werden kann, dass ein aus der Antriebsverbindung genommenes Zwischenzahnrad nicht unbeabsichtigt in eine Eingriffsstellung verlagert wird, können die Stellachsen in der Drehlage für die Außereingriffstellung der jeweiligen Zwischenzahnräder festgestellt werden.

Zum Umrüsten der an einem gemeinsamen Antriebstrang angeschlossenen Abtriebe eines Verteilergetriebes auf Einzelantriebe ist somit lediglich ein einfacher Einbausatz erforderlich, der sich durch eine die Radachse zumindest eines Zwischenzahnrads in der Antriebsverbindung zwischen dem jeweiligen Abtrieb und dem gemeinsamen Antriebstrang ersetzende Stellachse auszeichnet, die über exzentrische Stirnzapfen in Lagerdeckeln des Lagergehäuses verstellbar gelagert ist. Mit Hilfe solcher Einbausätze lassen sich daher auch aufwendige Verteilergetriebe für mehrere Abtriebe in einfacher Weise so vorbereiten, dass die einzelnen Abtriebe an Einzelantriebe angeschlossen werden können. Die exzentrisch gelagerten Stellachsen erlauben aber nicht nur ein Auskuppeln des jeweiligen Zahnrads, sondern ermöglichen auch im Bedarfsfall das Einstellen des Zahnflankenspiels. Damit kann in vorteilhafter Weise auf besondere Belastungsverhältnisse Rücksicht genommen werden.

### Kurze Beschreibung der Zeichnung

Anhand der Zeichnung wird das erfindungsgemäße Verfahren zum Umbau eines Verteilergetriebes für mehrere Abtriebe näher erläutert. Es zeigen
Fig. 1 eine Antriebsverbindung für einen Abtrieb eines Verteilergetriebes über zwei Zwischenzahnräder in einer vereinfachten Seitenansicht und
Fig. 2 einen Schnitt nach der Linie II-II der Fig. 1 in einem größeren Maßstab.

### Weg zur Ausführung der Erfindung

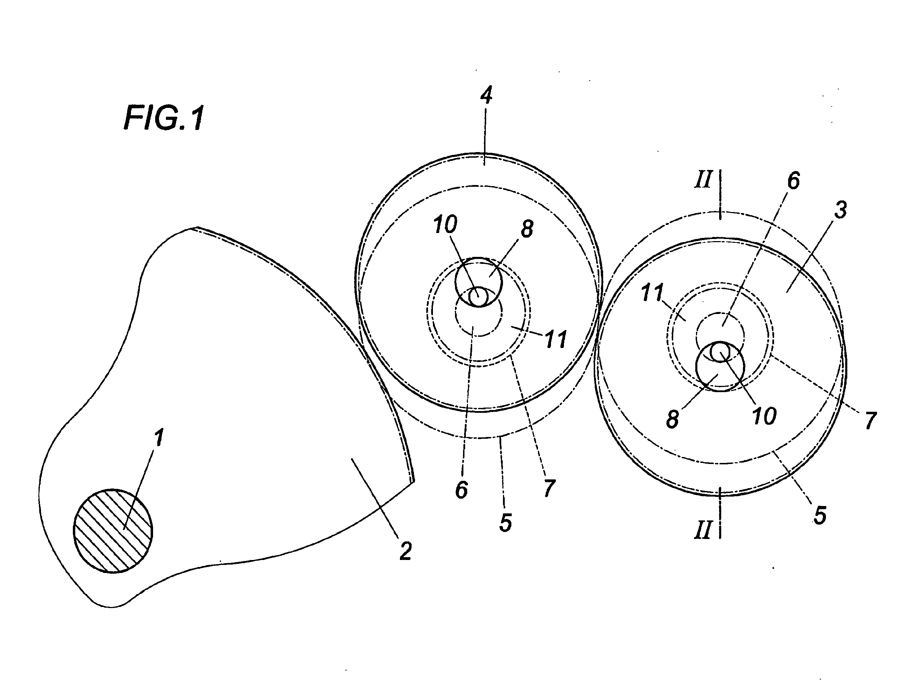

Gemäß der Fig. 1 wird einer der Abtriebe eines nicht näher dargestellten Verteilergetriebes durch die Abtriebswelle 1 eines Zahnrads 2 gebildet, das von einem gemeinsamen Antriebstrang des Verteilergetriebes über zwei Zwischenzahnräder 3 und 4 angetrieben wird. Die Eingriffstellungen sind über die strichpunktiert angedeuteten Teilkreise 5 der Zwischenzahnräder 3, 4 veranschaulicht. In diesen Eingriffstellungen verlaufen die strichpunktiert angedeuteten Radachsen 6 koaxial zu den die Radachsen 6 aufnehmenden Lagergehäusen 7, die in der Fig. 1 strichliert angedeutet sind.

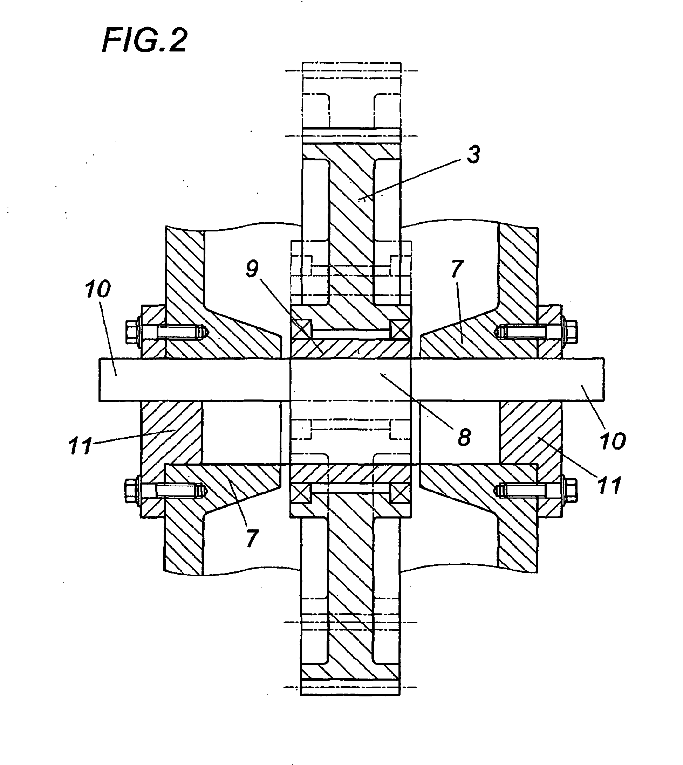

Um die Antriebsverbindung des Zahnrads 2 für den Abtrieb über die Zwischenzahnräder 3, 4 zu lösen, werden die Radachsen 6 dieser Zwischenzahnräder 3, 4 in axialer Richtung abgezogen und durch Stellachsen 8 ersetzt. Wie der Fig. 2 entnommen werden kann, sind die Zwischenzahnräder 3 und 4 auf einer Hülse 9 drehbar gelagert, die zunächst von der Radachse 6 und dann von der Stellachse 8 durchsetzt wird, die einen der Radachse 6 entsprechenden Durchmesser aufweist und koaxial durch die Lagergehäuse 7 zur Aufnahme der Hülse 9 eingeführt werden kann. Die Stellachse 8 weist im Gegensatz zur Radachse 6 jedoch zwei exzentrische Stirnzapfen 10 auf, die exzentrisch in Lagerdeckeln 11 der Lagergehäuse 7 drehbar gehalten werden. Nach dem Ersatz der Radachse 6 durch die Stellachse 8 wird somit das jeweilige Zwischenzahnrad 3, 4 über die exzentrischen Stirnzapfen 10 in den Lagerdeckeln 11 abgestützt, wie dies in der Fig. 2 in vollen Linien dargestellt ist. Wird nunmehr die Stellachse 8 über die exzentrischen Stimzapfen 10 verschwenkt, so wird das jeweilige Zwischenzahnrad 3, 4 mitgeschwenkt und aus dem Zahneingriff der benachbarten Zahnräder gelöst. In der Fig. 2 ist die Schwenkstellung des Zwischenzahnrads 3 mit der radialen Verlagerung aufgrund der Exzentrizität der Stirnzapfen 10 strichpunktiert dargestellt.

Aus der Fig. 1 ergibt sich, dass bei einem Drehen der Stellachse 8 um die in den Lagerdeckeln 11 exzentrisch gelagerten Stirnzapfen 10 in die mit vollen Linien dargestellte Drehstellung die Zwischenzahnräder 3, 4 aus dem Zahneingriff mit den jeweils benachbarten Zahnrädern genommen werden, wodurch die Antriebsverbindung zum Zahnrad 2 und damit zur Abtriebswelle 1 unterbrochen wird. Die Abtriebswelle 1 kann demnach ohne Schwierigkeiten über einen Einzelantrieb unabhängig vom gemeinsamen Antriebstrang des Verteilergetriebes angetrieben werden. Über die Stirnzapfen 10 braucht lediglich das Gewicht der Zwischenzahnräder 3, 4 auf die Lagerdeckel 11 abgetragen zu werden, sodass die im Vergleich zur Radachse 6 notwendige Reduzierung des Durchmessers der exzentrischen Stirnzapfen 10 für die Lastaufnahme keine Rolle spielt.

Zur Festlegung der in der Fig. 1 in vollen Linien dargestellten Außereingrifflage der Zwischenzahnräder 3 und 4 können die Stirnzapfen 10 der Stellachse 8 gegenüber den Lagerdeckeln 11 drehfest festgelegt werden.

Die Erfindung ist selbstverständlich nicht auf das dargestellte Ausführungsbeispiel beschränkt. So könnte beispielsweise die exzentrische Verlagerung der Stellachse 8 auch dazu genützt werden, das Flankenspiel des zugehörigen Zahnrads einzustellen.

## Patentansprüche

1. Verfahren zum Umbau eines Verteilergetriebes für mehrere Abtriebe, die an einen gemeinsamen Δntriebstrang über Zwischenzahnräder (3, 4) angeschlossen sind, deren Lagergehäuse (7) axial ausbaubare Radachsen (6) der Zwischenzahnräder (3, 4) aufnehmen, wobei die einzelnen Abtriebe vom gemeinsamen Antriebstrang abgekoppelt und an Einzelantriebe angeschlossen werden, **dadurch gekennzeichnet, dass** die Radachse (6) zumindest eines Zwischenzahnrads (3, 4) in der Antriebsverbindung zwischen dem jeweiligen Abtrieb und dem gemeinsamen Antriebstrang durch eine über exzentrische Stirnzapfen (10) vorzugsweise exzentrisch in Lagerdeckeln (11) gelagerte Stellachse (8) ausgewechselt wird, bevor das Zwischenzahnrad (3, 4) durch ein Drehen der Stellachse (8) um die Stirnzapfen (10) außer Eingriff geschwenkt wird.

2. Verfahren nach Anspruch 1, **dadurch gekennzeichnet, dass** die Stellachsen (8) in der Drehlage für die Außereingriffstellung der jeweiligen Zwischenzahnräder (3, 4) festgestellt werden.

3. Verteilergetriebe für mehrere Abtriebe, die an einen gemeinsamen Antriebstrang über Zwischenzahnräder angeschlossen sind, deren Lagergehäuse axial ausbaubare Radachsen der Zwischenzahnräder (3, 4) aufnehmen, **gekennzeichnet durch** einen Einbausatz, der eine die Radachse (6) zumindest eines Zwischenzahnrads (3, 4) in der Antriebsverbindung zwischen dem jeweiligen Abtrieb und dem gemeinsamen Antriebstrang ersetzende Stellachse (8) aufweist, die über exzentrische Stirnzapfen (10) exzentrisch in Lagerdeckeln (11) des Lagergehäuses (7) verstellbar gelagert ist.

## Claims

1. Method for modifying a transfer case for a plurality of outputs which are connected to a common drive train via intermediate gear wheels (3, 4) whose bearing housings (7) receive axially removable wheel axles (6) of the intermediate gear wheels (3, 4), wherein the individual outputs are decoupled from the common drive train and are connected to individual drives, **characterised in that** the wheel axle (6) of at least one intermediate gear wheel (3, 4) in the drive connection between the respective output and the common drive train is replaced by an adjusting axle (8) which is preferably eccentrically mounted in bearing covers (11) via eccentric end journals (10), before the intermediate gear wheel (3, 4) is pivoted out of engagement by rotating the adjusting axle (8) around the end journals (10).

2. Method as claimed in claim 1, **characterised in that** the adjusting axles (8) are fixed in the rotational position for the disengagement of the respective intermediate gear wheels (3, 4).

3. Transfer case for a plurality of outputs which are connected to a common drive train via intermediate gear wheels whose bearing housings receive axially removable wheel axles of the intermediate gear wheels (3, 4), **characterised by** an installation set which comprises an adjusting axle (8) which replaces the wheel axle (6) of at least one intermediate gear wheel (3, 4) in the drive connection between the respective output and the common drive train and which is mounted so as to be eccentrically adjustable in bearing covers (11) of the bearing housing (7) via eccentric end journals (10).

## Revendications

1. Procédé destiné à transformer une boîte de transfert pour plusieurs sorties qui sont raccordées à une chaîne cinématique commune par des roues dentées intermédiaires (3, 4), dont les logements de palier (7) reçoivent des axes de roue (6), axialement démontables, des roues dentées intermédiaires (3, 4), les sorties individuelles étant découplées de la chaîne cinématique commune et raccordées à des entraînements individuels, **caractérisé en ce que** l'axe de roue (6) d'au moins une roue dentée intermédiaire (3, 4), dans la liaison d'entraînement, entre la sortie respective et la chaîne cinématique commune, est remplacé par un axe de réglage (8) placé de préférence de manière excentrique dans des couvercles de palier (11) par l'intermédiaire de tourillons frontaux excentriques (10) avant que la roue dentée intermédiaire (3, 4) soit mise hors prise par une rotation de l'axe de réglage (8) autour des tourillons frontaux (10).

2. Procédé selon la revendication 1, **caractérisé en ce que** les axes de réglage (8) sont bloqués en état de rotation pour la position hors prise des roues dentées intermédiaires (3, 4) respectives.

3. Série de boîtes de transfert pour plusieurs sorties qui sont raccordées à une chaîne cinématique commune par des roues dentées intermédiaires, dont les logements de palier reçoivent des axes de roue, axialement démontables, des roues dentées intermédiaires (3, 4), **caractérisée par** un ensemble de montage qui présente un axe de réglage (8) remplaçant l'axe de roue (6) d'au moins une roue dentée intermédiaire (3, 4) dans la liaison d'entraînement, entre la sortie respective et la chaîne cinématique commune, qui est placé réglable de manière excentrique dans des couvercles de palier (11) du logement de palier (7) par l'intermédiaire de tourillons frontaux excentriques (10).
